# EUROPEAN PATENT APPLICATION

(11) **EP 1 671 539 A1**
(43) Date of publication of application: **21.06.2006**
(21) Application number: 04708879.4
(22) Date of filing: 06.02.2004
(51) Int. Cl.: A01K 29/00, B60R 22/10

(54) **PET STORAGE BOX FIXING STRUCTURE, PET STORAGE BOX, AND CONNECTION DEVICE**

(71) Applicant: CKsales Corporation, Nakano-ku Tokyo 164-8602 (JP)
(72) Inventor: KAMIJO, Ken, c/o Cksales Corporation, Tokyo 164-8602 (JP)
(74) Representative: Grünecker, Kinkeldey, Stockmair & Schwanhäusser Anwaltssozietät
(86) International application number: PCT/JP2004/001254
(87) International publication number: WO 2005/074674

(57) **Abstract**

A pet storage box fixing structure configured to fix the pet storage box (10) in which a pet is stored, to a vehicle body (1) in a vehicle interior, wherein the pet storage box is placed on a seat cushion (2a), and a seat belt (3) of a seat belt device is passed through a belt insert hole (16) on an outer peripheral surface side of the pet storage box (10) and directly connected to the pet storage box (10) so that the connected seat belt is in a belt attached state. The pet storage box (10) comprises a storage box body (11) and a reinforcing belt (12). The pet storage box (10) is provided with the belt insert hole (16) which is formed by using a restrain belt part (12a) of the reinforcing belt (12). Stable belt parts (12b,12c) of the reinforcing belt (12) are hooked to columns (2c,2c') of rear and front seats (2,2').

## Description

### Technical Field

The present invention relates to a pet storage box fixing structure, a pet storage box, and a connection tool configured to fix the pet storage box to a vehicle body in a vehicle interior.

### Background Art

Currently, when the pet owners take their pets in the vehicle, they desire to protect their pets as well as human beings in emergency situation, in a car crash, for instance.

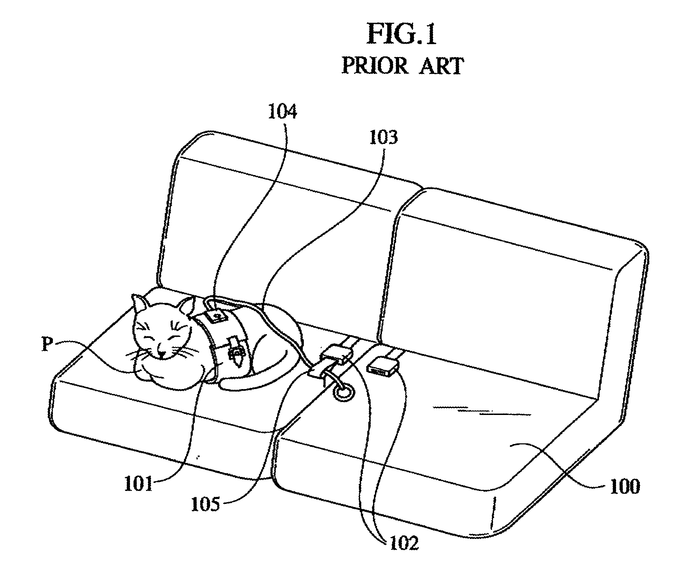

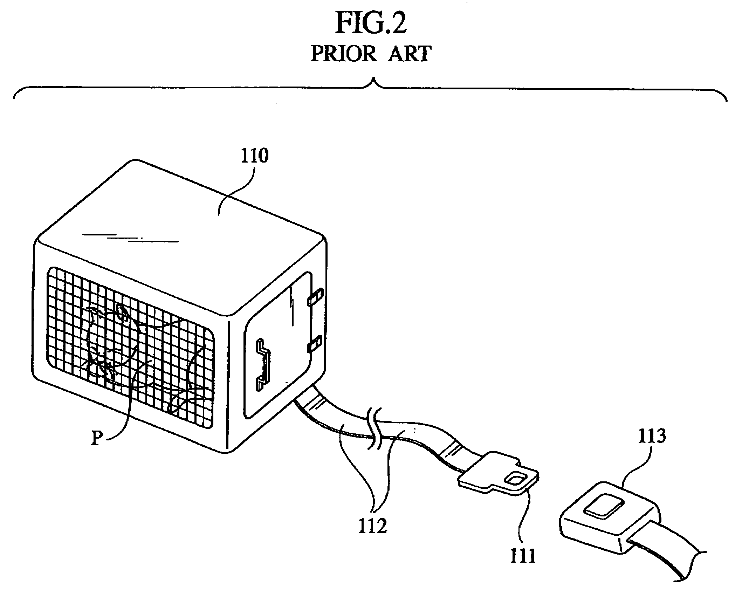

In response to this desire, JP Patent Laid-Open Publication No. H08-20307 discloses ways to keep the pet secure in the vehicle, as shown in FIGS. 1 and 2.

A fixing structure shown in FIG. 1 has a restrain band 101 directly restraining a body of a pet P placed on a seat cushion 100, and a connection lope 103 via which the restrain band 101 is connected to a buckle 102 of a seat belt device. The connecting lope 103 is detachably provided with a carabiner 104 on one end thereof and a tongue member 105 on the other end thereof. In this fixing structure, the pet P can move freely within a limited area by the connection lope 103 on the seat cushion 100.

A pet fixing structure shown in FIG. 2 has a pet storage box 110 in which a pet P is stored, and a connection belt 112 with one end fixed to the pet storage box 110 and the other end on which a tongue member 111 is fixed, so as to attach the tongue member 111 of the connection belt 112 to a buckle 113 of a seat belt device. In this fixing structure, the pet P can move freely within the pet storage box 110.

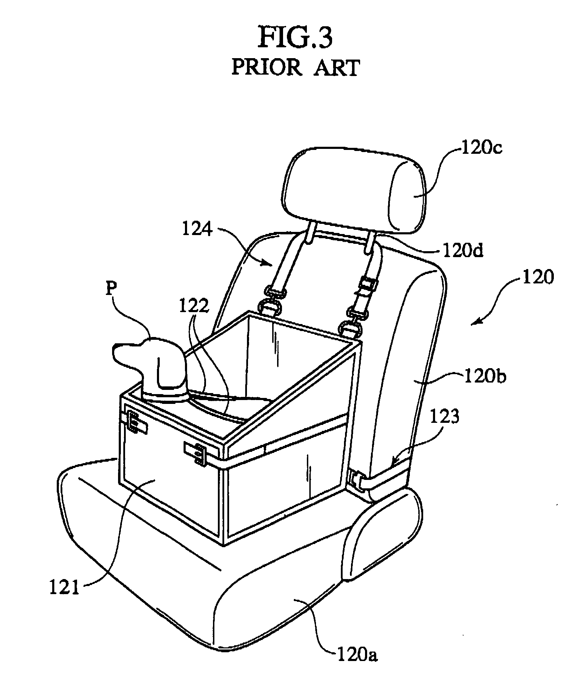

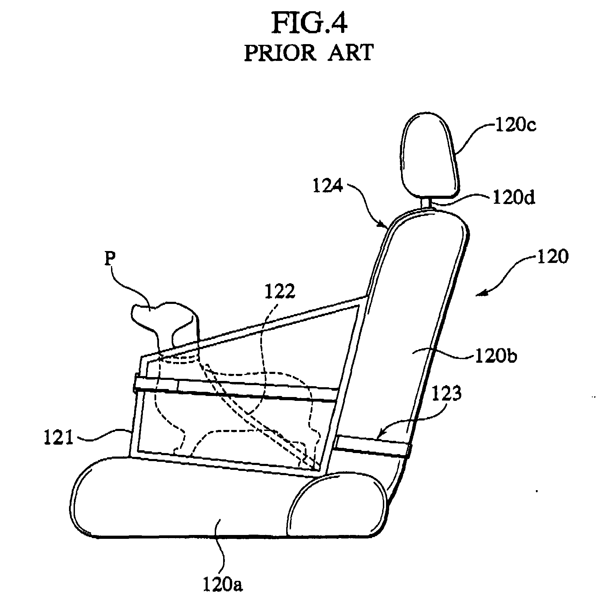

Moreover, another conventional example is shown in FIGS. 3 and 4, which are disclosed in JP Paten Laid-Open Publication No. 2002-159238.

A pet fixing structure shown in FIGS. 3 and 4 has a pet storage box 121 which is placed on a seat cushion 120a of a seat 120 and has an opened upper surface, a pet connection belt 122 connecting a pet P in the pet storage box 121, and two dedicated fixing belts 123,124 fixing the pet storage box 121 on the seat cushion 120a. The two dedicated fixing belts 125,124 are formed with one fixing belt which is hooked to a seat back 120b and has both ends connected to a bottom portion of the pet storage box 121, and the other fixing belt which is hooked to columns 120d of a head rest 120c and has both ends connected to an upper portion of the pet storage box 121. In this structure, the pet P can move freely within a limited area by the pet connection belt 122 in the pet storage box 121.

In the pet fixing structure shown in FIG. 1, in emergency situation, however, the pet P is moved a distance of a length of the connection lope 103 and not stopped until the connection lope 108 stretches completely, which gives a large impact to the pet P. Since the pet P can move within the limited area by the connection lope 103, the pet will hit other members. If the pet P is in a bad position or hits a bad portion, it might lead to a severe injury, which lacks the security for the pet. Moreover, if the pet moves or acts up by given impact, a driver becomes careless, which brings extreme danger to the driver.

Similarly, in the pet configuration structure shown in FIG. 2, in emergency situation, the pet storage box 110 is moved a distance of a length of the connection belt 112 and not stopped until the connection belt 112 stretches completely, which gives a large impact to the pet storage box 110. At the same time, this gives a large impact to the pet P stored in the pet storage box 110, and thus the pet P might get hurt. If the pet storage box 110 hits other members, the pet P stored in the pet storage box 110 also might get hurt badly, which lacks the safety.

In the pet fixing structure shown in FIGS. 3 and 4, since the pet storage box 121 is fixed to the seat 120 of the vehicle, the impact in vehicle emergency is given to the seat 120. Thus, if the strength of the seat 120 is not sufficient enough, the seat 120 might be broken and thereby the pet storage box 121 might be thrown forward. Since the pet P is fixed by the pet connection belt 122, the pet P might get the impact directly. Further, fixing the pet storage box 121 requires fixing operations by using the dedicated fixing belts 123,124, which lacks the versatility and is troublesome. Furthermore, when the pet storage box 121 is detached from the vehicle, the dedicated fixing belts 123,124 need to be kept so as not to be lost, which raises a keeping problem.

### Disclosure of the Invention

An object of the present invention is to provide a pet storage box fixing structure, pet storage box, and connection tool, capable of offering superior safety and easy fixing of the pet storage box without a dedicated fixing belt, and not requiring to keep the dedicated fixing belt.

To achieve the above object, the present invention provides a pet storage box fixing structure configured to fix the pet storage box in which a pet is stored, to a vehicle body in a vehicle interior, wherein the pet storage box is placed on a seat, and a seat belt of a seat belt device is directly connected to an outer peripheral surface side of the pet storage box so that the connected seat belt is in a belt attached state.

According to the present invention, in emergency situation, for example in a car crash, although the pet storage box is moved forward instantaneously, the seat belt device immediately operates to lock the seat belt, which prevents the movement of the pet storage box so that the pet storage box is hardly moved. The pet will hit the interior wall of the pet storage box which hardly moves, thereby being given only a relatively small impact. Since the pet is stored in the pet storage box that is formed into a closed space, it allows the pet to move freely in the pet storage box to some extent, and at the same time prevents the pet from being thrown forward in vehicle emergency. It also prevents the pet from being moved from the seat or acting up by given the impact so that the driver is not disturbed by the pet while driving. Moreover, fixing the pet storage box by means of the seat belt of the seat belt device eliminates a use of special parts such as fixing belt used in the conventional examples.

In a preferred embodiment of the present invention, a pet storage box has a reinforcing belt mounted to cover an outer peripheral surface of the storage box body, a belt insert hole is provided by using the reinforcing belt, and a seat belt is passed through the belt insert hole so that the seat belt is directly connected to the pet storage box.

According to this embodiment, passing the seat belt through the belt hole brings the seat belt and the pet storage box connected firmly. Moreover, receiving a lock force of the seat belt by the reinforcing belt enables to hold a position of the pet storage box certainly, and at the same time prevents the storage box body from being damaged by the lock force of the seat belt.

In a preferred embodiment of the present invention, a reinforcing belt has a restrict belt part mounted to cover an outer peripheral surface of the storage box body and a looped stable belt part with both ends fixed to the restrain belt part, and the stable belt part is hooked to a column of a head rest.

According to this embodiment, the pet storage box is fixed to the column by means of the stable belt part.

In a preferred embodiment of the present invention, a stable belt part comprises two parts, one stable belt part hooked to a column located on a seat where the pet storage box is placed, and the other stable belt part hooked to a column located in front of the seat where the pet storage box is placed.

According to this embodiment, the pet storage box is fixed to the rear and front columns by means of the two stable belt parts.

In a preferred embodiment of the present invention, a seat belt of a seat belt device has a shoulder belt portion with one end supported on a vehicle body side and the other free end on which a tongue member is fixed, a lap belt portion with one end supported on the vehicle body side and the other end connected to the shoulder belt portion, and an anchor belt portion with one end supported on the vehicle body side and the other free end on which a buckle is fixed, and the tongue member is attached to the buckle in a manner that both of the shoulder belt portion and the lap belt portion are passed through the belt insert hole.

According to this embodiment, the pet storage box is fixed to the vehicle body side by using so called three-point seat belt device.

To achieve the above object, the present invention provides a pet storage box comprising a bag body formed by a perforated material, a flame attached to the bag body so as to hold the bag body in a form of a box type, and a reinforcing belt mounted on the bag body so as to be connected to a seat belt of a seat belt device.

According to the present invention, the pet storage box has the bag body held in the form of the box type which is formed into a closed space. The pet will hit only the interior surface of the pet storage box in a car crash, and thus the impact given to the pet stored in the pet storage box is alleviated. Moreover, the bag body is formed by the perforated material so that the pet stored in the pet storage box does not have a feeling of pressure. In addition, connecting the reinforcing belt to the seat belt of the seat belt device brings the pet storage box connected to the seat belt firmly. Furthermore, receiving the lock force of the seat belt by the reinforcing belt enables to hold the position of the pet storage box certainly, and at the same time prevents the storage box body from being damaged by the lock force of the seat belt.

In a preferred embodiment of the present invention, a bag body is formed by a mesh material.

In this embodiment, forming the bag body by the mesh material offers a better absorption of impact.

In a preferred embodiment of the present invention, an interior surface of a storage box body is formed into a non-protrusion structure.

In this embodiment, having the non-protrusion structure on the interior surface offers a better safety to a pet.

In a preferred embodiment of the present invention, a belt insert hole is provided by using a reinforcing belt.

According to this embodiment, a seat belt is passed through the belt insert hole so that the seat belt is firmly connected to a pet storage box.

In a preferred embodiment of the present invention, a reinforcing belt has a restrict belt part mounted to cover an outer peripheral surface of the storage box body and a looped stable belt part with both ends fixed to the restrain belt part.

According to this embodiment, the stable belt part can be used subsidiarily when fixing the pet storage box in a vehicle interior of a vehicle body. Also, the stable belt part can be used as a belt for carrying when the pet storage box is detached from the vehicle body.

In a preferred embodiment of the present invention, a stable belt part comprises two parts.

According to this embodiment, the two stable belt parts are used subsidiarily when fixing the pet storage box, which increases the safety. Also, the two stable belt parts can be used as the belts for carrying, which increases portability.

To achieve the above object, the present invention provides a connection tool comprising a pair of restrict belt parts winded on an outer peripheral surface of a storage box body, and a pair of stable belt parts with free ends fixed to the restrain belt parts and intermediate portions hooked to a column of a head rest provided on a seat of a vehicle body.

According to the present invention, if the connection tool comprising the restrain belt part and the stable belt part, is mounted on a pet storage box which is commercially available, the pet storage box hardly moves in vehicle emergency, in a car crash, for instance.

### Brief Description of the Drawings

FIG. 1 is a perspective view of a conventional pet fixing structure.
FIG. 2 is a perspective view of one conventional pet storage box fixing structure.
FIG. 3 is a perspective view of another conventional pet storage box fixing structure.
FIG. 4 is a side view of the another conventional pet storage box fixing structure.
FIG. 5 is a perspective view of a pet storage box fixing structure according to the present invention.
FIG. 6 is a side view of the pet storage box fixing structure according to the present invention.

### Best Mode for Carrying Out the Invention

Hereinafter, an exemplary embodiment of the present invention will be described with reference to figures.

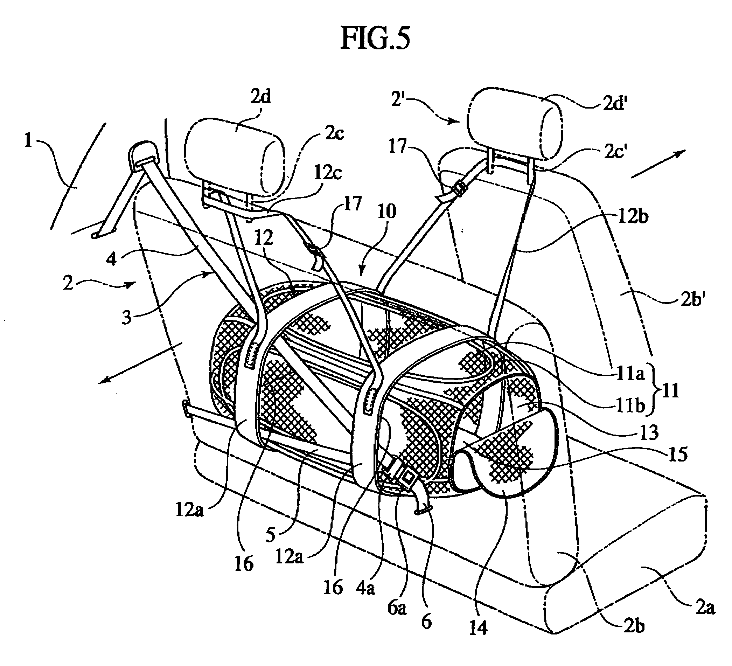

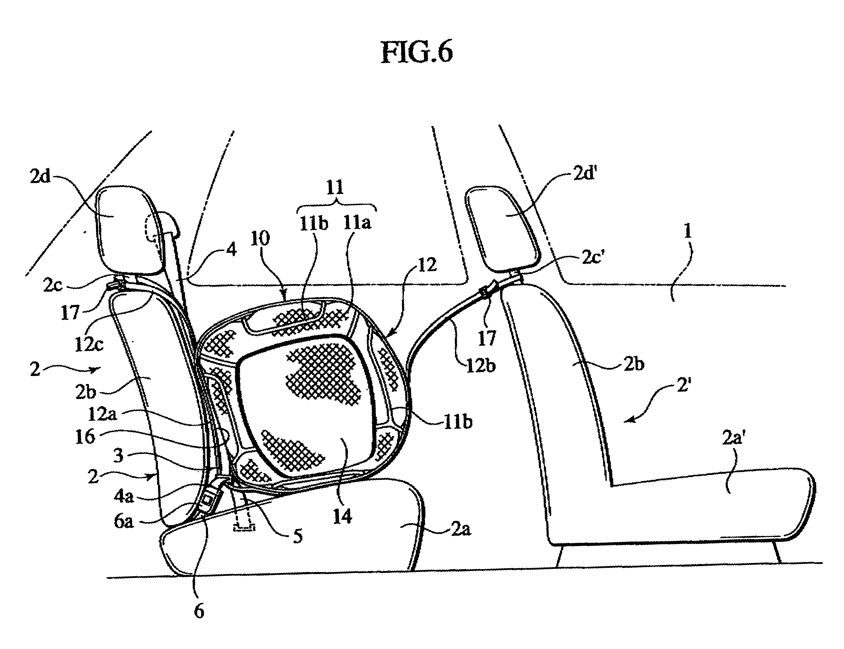

As shown in FIGS. 5 and 6, seats 2, 2' are mounted in rear and front rows in a vehicle interior of a vehicle body 1. The seats 2,2' comprises seat cushions 2a, 2a' fixed to the bottom face side of the vehicle interior, seat backs 2b, 2b' standingly provided on the rear ends of the seat cushions 2a, 2a', and head rests 2d, 2d' supported on the upper ends of the seat backs 2b, 2b' via columns 2c, 2c'. A pet storage box 10 is placed on the rear seat 2.

In the vehicle interior of the vehicle body 1, the rear and front seats 2, 2' are provided with seat belt devices. A seat belt 3 of each seat belt device comprises a shoulder belt portion 4 with one end supported on the vehicle body 1 side and the other free end on which a tongue member 4a is fixed, a lap belt portion 5 with one end supported on the vehicle body 1 side and the other end connected together to the shoulder belt portion 4, and an anchor belt portion 6 with one end supported on the vehicle body 1 side and the other free end on which a buckle 6a is fixed. The shoulder belt portion 4 and the lap belt portion 5 can be normally pulled out in the vehicle interior against a wind force by a wind device (not shown) mounted on the vehicle body 1 side. However, in emergency situation, the wind device detects an impact, thereby automatically locking the pull out of the shoulder belt portion 4 and the lap belt portion 5.

The pet storage box 10 comprises a storage box body 11 and a reinforcing belt 12 mounted to cover an outer peripheral surface of the pet storage box body 11, and is placed on the rear seat cushion 2a such that the pet storage box 10 is almost attached closely to the seat back 2b of the rear seat 2.

The storage box body 11 comprises a bag body 11a which is formed by a perforated material such as polyester mesh with fine mesh, the developed form of the bag body 11a being identical to an rectangular solid, and a wire flame (flame) 11b which is mounted on the bag body 11a and holds the bag body 11a in the form of a box type. An opening portion 13 is formed on one of the side surfaces of the bag body 11a, and opened and closed by a lid body 14 by means of a fastener. Through this opening portion 13, it is possible to put in and take out a pet (not shown). On the bottom surface of the bag body 11a, a waterproof fabric is spread. The wire flame 11b is changed to a folded position by an external force acting in a given direction, which enables the box body 11 to be in a folded configuration. An interior wall of the box body 11 is formed into a non-protrusion structure.

The reinforcing belt 12 comprises a pair of restrain belt parts 12a mounted to cover the outer peripheral surface of the pet storage box body 11, and looped stable belt parts 12b, 12c each having both ends fixed to the restrain belt parts 12a at upper end positions of the restrain belt parts 12a.

The restrain belt parts 12a are firmly fixed to the bag body 11a by means of thread or adhesive, for instance. An interspace between the restrain belt parts 12a and the outer peripheral surface of the bag body 11a forms belt insert holes 16. The shoulder belt portion 4 and the lap belt portion 5 are passed through these belt insert holes 16.

The two stable belt parts 12b, 12c are provided with adjustment clips 17, respectively. These adjustment clips 17 enable the stable belt parts 12b, 12c to be unlooped and looped, and to be adjusted in length. The stable belt part 12b located on the front side of the vehicle interior is hooked to the column 2c' of the front seat 2'. The stable belt part 12c located on the rear side of the vehicle interior is hooked to the column 2c of the rear seat 2.

Next, a fixing process for fixing the pet storage box 10 to the vehicle body 1 in the vehicle interior will be described. Firstly, the pet storage box 10 is placed on the rear seat cushion 2a such that the pet storage box 10 is almost attached closely to the seat back 2b. Secondly, the shoulder belt portion 4 and the lap belt portion 5 are pulled out from a waiting position of the seat belt device and the rear ends thereof are passed through the belt insert holes 16. The tongue member 4a of the shoulder belt portion 4 and the lap belt portion 5, which are passed through the belt insert holes 16, is attached to the buckle 6a. The wind force of the seat belt device makes the shoulder belt portion 4 and the lap belt portion 5 strained with a predetermined tension, in a belt-attached condition.

The adjustment clips 17 of the stable belt parts 12b, 12c are unfasten, then the adjustment clip 17 of the stable belt part 12b is fasten with one stable belt part 12b hooked to the column 2c' of the front seat 2', and the adjustment clip 17 of the stable belt part 12c is fasten with the other stable belt part 12c hooked to the column 2c of the rear seat2, thereby completing the fixing process. In this process, it is preferable to attach the stable belt parts 12b, 12c to be strained with the predetermined tension.

The two stable belt parts 12b, 12c may be hooked to the columns 2c, 2c' before the pet storage box 10 is placed on the rear seat cushion 2a, and then the pet storage box 10 may be placed on the rear seat cushion 2a. It is only required to place the pet storage box 10 on the rear seat cushion 2a with being almost attached closely to the seat back 2b when the fixing process is completed.

Next, the operation of the fixing structure will be described. In emergency situation, for example in a car crash, the pet storage box 10 is moved forward instantaneously, and the seat belt device operates to lock the seat belt 3, thus preventing the movement of the pet storage box 10. The pet (not shown) will hit only the interior surface of the pet storage box 10 which hardly moves. Therefore, the pet has only a relatively small impact because the interior surface of the storage box body 11 is constituted by the non-protrusion structure , which offers superior safety. The pet is stored in the pet storage box 10 that is formed into a closed space, which prevents the pet from being thrown forward in emergency situation. It also prevents the pet from being moved from the seat 2 or acting up by given the impact so that the driver is not disturbed by the pet, which offers safety. Fixing the pet storage box 10 by means of the seat belt 3 of the seat belt device eliminates a use of special parts such as fixing belt and realizes a simple fixing. Moreover, fixing the pet storage box 10 by means of the seat belt 3 eliminates a need of keeping the special parts such as fixing belts when the pet storage box 10 is detached from the vehicle body 1.

In the above exemplary embodiment, the pet storage box 10 has the reinforcing belt 12 mounted to cover the outer peripheral surface of the pet storage box body 11. The reinforcing belt 12 is employed to provide the belt insert holes 16 so as to pass the seat belt 3 through the belt insert holes 16 to connect the seat belt 3 to the pet storage box 10. Therefore, even though any external force acts, the seat belt 3 is unfastened from the pet storage box 10. As a result, the safety for the pet is increased. Receiving the lock force of the seat belt 3 by the reinforcing belt 12 enables to hold the position of the pet storage box 10 certainly, and prevents the storage box body 11 from being damaged by the lock force of the seat belt 3.

In the above exemplary embodiment, although the belt insert holes 16 are formed by the interspace between the restrain belt parts 12a and the outer peripheral surface of the storage box body 11, the belt insert holes 16 may be formed by doubling parts of the restrain belt parts 12a.

In the above exemplary embodiment, the reinforcing belt 12 comprises the restrain belt parts 12a mounted to cover the outer peripheral surface of the pet storage box body 11, and the looped stable belt parts 12b, 12c each having both ends fixed to the restrain belt parts 12a. The stable belt parts 12b, 12c are hooked to the columns 2c, 2c' of the head rests 2d, 2d' to fix the pet storage box 10 to the columns 2c, 2c'. Therefure, the pet storage box 10 is firmly fixed to the vehicle body 1, which increases the safety. When the pet storage box 10 is detached from the vehicle body 1, the stable belt parts 12b, 12c are used as belts for carrying, which provides convenience in carrying the pet storage box 10.

Moreover, in the above exemplary embodiment, the stable belt parts 12b, 12c are formed by the two belts, one stable belt part 12c hooked to the column 2c located on the seat 2 where the pet storage box 10 is placed and the other stable belt part 12b hooked to the column 2c' located on the front side of the seat 2 where the pet storage box 10 is placed, which firmly fixes the pet storage box 10 to the vehicle body 1 to increase the stability. At the same time, the portability is increased. In the above exemplary embodiment, although the two stable belt parts 12b, 12c are hooked to the columns 2c, 2c' respectively, only either one of the two may be hooked. When the pet storage box 10 is placed on the front seat 2' in the vehicle interior 1, the pet storage box 10 is fixed by the stable belt parts 12b, 12c both hooked only to the column 2c' of the front seat 2'.

In the above exemplary embodiment, the seat belt 3 of the seat belt device comprises the shoulder belt portion 4 with one end supported on the vehicle body 1 side and the other free end on which the tongue member 4a is fixed, the lap belt portion 5 with one end supported on the vehicle body 1 side and the other end connected together to the shoulder belt portion 4, and the anchor belt portion 6 with one end supported on the vehicle body 1 side and the other free end on which the buckle 6a is fixed. The tongue portion 4a is attached to the buckle 6a, with the shoulder belt portion 4 and the lap belt portion 5 passed through the belt insert holes 16. That is, the pet storage box 10 is fixed by using so called three-point seat belt device. The pet storage box 10 may be fixed by using two-point seat belt device instead of the three-point seat belt device, in a similar manner.

Moreover, in the above exemplary embodiment, although the bag body 11a of the pet storage box 10 is formed by the perforated material such as polyester mesh with fine mesh, any material capable of softly wrapping around the pet, functioning as cushioning and absorbing the impact, may be used.

### Industrial Applicability

A pet storage box hardly moves in vehicle emergency, for example in a car crash, and thereby only a relatively small impact is given to a pet, which is superior in safety.

The pet is stored in the pet storage box, which allows the pet to move freely in the pet storage box to some extent and, at the same time, prevents the pet from being thrown forward in vehicle emergency.

The pet is stored in the pet storage box, and thereby a driver is not disturbed by the pet while driving.

The pet storage box can be fixed by using a seat belt of a seat belt device, which offers an easy fixing of the pet storage box without a dedicated fixing belt.

When the pet storage box is detached from the vehicle body, there is no need to keep the dedicated fixing belt.

## Claims

1. A pet storage box fixing structure configured to fix the pet storage box in which a pet is stored, to a vehicle body in a vehicle interior, wherein the pet storage box is placed on a seat, and a seat belt of a seat belt device is directly connected to an outer peripheral surface side of the pet storage box so that the connected seat belt is in a belt attached state.

2. The pet storage box fixing structure according to claim 1, wherein the pet storage box has a reinforcing belt mounted to cover the outer peripheral surface of the storage box body, a belt insert hole is provided by using the reinforcing belt, and the seat belt is passed through the belt insert hole so that the seat belt is directly connected to the pet storage box.

3. The pet storage box fixing structure according to claim 2, wherein the reinforcing belt has a restrict belt part mounted to cover the outer peripheral surface of the storage box body and a looped stable belt part with both ends fixed to the restrain belt part, and the stable belt part is hooked to a column of a head rest.

4. The pet storage box fixing structure according to claim 3, wherein the stable belt part comprises two parts, one stable belt part hooked to the column located on the seat where the pet storage box is placed, and the other stable belt part hooked to the column located in front of the seat where the pet storage box is placed.

5. The pet storage box fixing structure according to one of claims 1 to 4, wherein the seat belt of the seat belt device has a shoulder belt portion with one end supported on a vehicle body aide and the other free end on which a tongue member is fixed, a lap belt portion with one end supported on the vehicle body side and the other end connected to the shoulder belt portion, and an anchor belt portion with one end supported on the vehicle body aide and the other free end on which a buckle is fixed, and the tongue member is attached to the buckle in a manner that both of the shoulder belt portion and the lap belt portion are passed through the belt insert hole.

6. A pet storage box comprising:
a bag body formed by a perforated material;
a flame attached to the bag body so as to hold the bag body in a form of a box type; and
a reinforcing belt mounted on the bag body so as to be connected to a seat belt of a seat belt device.

7. The pet storage box according to claim 6, wherein the bag body is formed by a mesh material.

8. The pet storage box according to one of claims 6 or 7, wherein an interior surface of the bag body is formed into a non-protrusion structure.

9. The pet storage box according to one of claims 6 to 8, wherein the belt insert hole is provided by using the reinforcing belt.

10. The pet storage box according to one of claims 6 to 9, wherein the reinforcing belt has a restrict belt part mounted to cover an outer peripheral surface of the storage box body and a looped stable belt part with both ends fixed to the restrain belt part.

11. The pet storage box according to claim 10, wherein the stable belt part comprises two parts.

12. A connection tool comprising:
a pair of restrict belt parts winded on an outer peripheral surface of a storage box body; and
a pair of stable belt parts with free ends fixed to the restrain belt parts and intermediate portions hooked to a column of a head rest provided on a seat of a vehicle body.
